# EUROPEAN PATENT SPECIFICATION

(11) **EP 3 573 750 B1**
(45) Date of publication and mention of the grant of the patent: **01.05.2024**
(21) Application number: 18701478.2
(22) Date of filing: 25.01.2018
(51) Int. Cl.: B01J 19/18, B01J 19/00, C10G 15/08

(54) **METHOD FOR THERMAL CONVERSION OF HYDROCARBONS USING A REACTION PUMP**
VERFAHREN ZUR THERMISCHEN UMWANDLUNG VON KOHLENWASSERSTOFFEN UNTER VERWENDUNG EINER REAKTIONSPUMPE
PROCÉDÉ DE CONVERSION THERMIQUE D'HYDROCARBURES UTILISANT UNE POMPE À RÉACTION

(30) Priority: 26.01.2017 GB 201701316
(43) Date of publication of application: 04.12.2019
(73) Proprietor: Ecofuel Technologies Ltd, J3203 Malta (MT)
(72) Inventor: GUENTHER, Thomas Andreas, 07181 Portals Nous (ES)
(74) Representative: Linsmeier, Josef
(86) International application number: PCT/EP2018/051821
(87) International publication number: WO 2018/138194

(56) References cited:
- EP-A1- 2 693 060
- WO-A2-2014/087238
- GB-A- 1 223 610
- US-A- 3 221 659
- US-A1- 2006 292 000

## Description

The present invention relates to a method for thermal conversion of hydrocarbons according to the independent claim.

Processes for thermal decomposition of hydrocarbon-containing raw materials, e.g. wood-based materials, with the aim of obtaining liquid fuels, coal or activated carbons are working conventionally in temperature ranges between 500°C and 900°C. Although for splitting ligno-cellulosic materials sufficient temperatures are between 270°C and 450°C, significantly higher process temperatures are usually applied. The main reason is that most reactors are heated from outside, but also because ligno-cellulosic materials are very poor conductors of heat. In order to make sure that the heat is not only effective at the reactor walls but can also reach the materials inside the reactor, temperature levels significantly higher than necessary for hydrocarbon splitting are usually applied. In this way, the heat necessary for the reaction can be fed into the process in an acceptable timeframe.

In practice, this results in that the major part of materials during the conversion process is exposed to temperatures which are much higher than necessary for splitting. However, the more the actual process temperatures exceed the temperatures necessary for hydrocarbon decomposition, the more yield- and quality-reducing side reactions occur. As a result, the possible yield and the quality of the derived liquid fuels is reduced. For example, in the processing of wood-based raw materials having high oxygen content a strong increase of formation of oxo-components can be observed with increasing temperature. In contrast, at lower temperatures and using a catalyst a major portion of vacated oxygen reacts by forming carbon compounds like CO or CO₂. Since biomass, with respect to the conversion to middle distillates like jet fuel and diesel, shows a carbon surplus (i.e., in relation to the carbon content there is not enough hydrogen present so that all of the carbon could be converted into liquid fuel), these reactions are no real loss, but rather ensure a separation of oxygen without disadvantages for the products. Higher temperatures, however, cause a formation of a variety of carboxylic acids and other oxo-components. These bind strongly to the liquid fuel products and reduce their quality considerably. With regard to bituminous splitting products, higher temperature levels lead to a faster formation of gases and a conversion into coal and, therefore, to products with significantly lower economic value.

US 3,221,659 discloses a pump combination which includes a housing including a lobed pumping chamber or chambers and a liquid pumping chamber, and including a cylindrical liquid ring rotor and a centrifugal liquid impeller of unitary construction mounted on at common drive shaft within the confines of the pumping chambers. The liquid ring pump portion is arranged to take suction directly from the apparatus from which the boiling liquid, the vapours, and gases are to be removed, and to discharge these at an intermediate pressure to the inlet of the liquid impeller. GB 1 223 610 discloses a reaction centrifuge for the reaction of gases with liquids, or with liquid or solid substances in finely divided form in liquids, incorporating a liquid ring pump which comprises a rotor supporting a number of vanes disposed in a housing whereby to define a plurality of chambers between said housing and said rotor to receive the substances to be reacted, first discharge means at the housing wall for the discharge of the substance of greater specific gravity and second discharge means at the rotor for the discharge of the substance of lower specific gravity after reaction during operation of said centrifuge. US 2006/0292000 A1 discloses a liquid ring pump with one or several stages, each of which comprises a working chamber, an impeller that is eccentrically mounted therein, flat control disks that axially delimit the working chamber on both sides, and ducts or chambers that are located adjacent to the control disks and deliver and discharge the transport gas to and from the working chamber. The inventive liquid ring pump is characterized in that the control disks are embodied in the same manner with identical suction ports and pressure ports while ports that are not needed are covered on the side facing away from the impeller. WO 2014/087238 A2 discloses a reaction pump for conversion of hydrocarbons comprising a housing, a reaction chamber enclosed by the housing, for containment of a hydrocarbon process fluid or liquid reactant, a mixing element disposed inside the reaction chamber, the mixing element coupled to a rotatable shaft, and a plurality of bearings receiving the shaft, each bearing being disposed outside the reaction chamber.

The invention is based on the problem to provide a reaction a method for thermal conversion of hydrocarbons by which yield and/or quality of the products are enhanced compared to conventional approaches.

The above problem is solved by a method for thermal conversion of hydrocarbons according to the independent claim.

A reaction pump for thermal conversion of hydrocarbons used in the method according to the invention comprises a reaction chamber, an inlet section configured to conduct a first mixture containing hydrocarbons into the reaction chamber, an outlet section and a first rotor disposed in the reaction chamber and configured to transfer energy to the first mixture to split hydrocarbons contained in the first mixture, whereby a second mixture containing split hydrocarbons is obtained, and to convey the second mixture to the outlet section, and a second rotor disposed in the outlet section and configured to convey the second mixture through the outlet section and to temporarily pressurize the second mixture when being conveyed through the outlet section.

The reaction pump used in the method according to the present invention can be used in a system for producing liquid fuels and bitumen raw materials by thermal conversion of hydrocarbons together with first separating device configured to separate gaseous components, in particular fuel gases, from the second mixture and/or a second separating device configured to separate solid components, in particular bitumen and/or solid additives, from the second mixture.

According to the invention as defined in claim 1, the method for thermal conversion of hydrocarbons uses a reaction pump, said reaction pump comprising a reaction chamber comprising a cylindrical inner wall, a first rotor disposed in the reaction chamber, wherein the first rotor comprises two or more vanes and is mounted eccentrically within the cylindrical inner wall of the reaction chamber, a drive unit configured to rotate the first rotor, and an outlet section comprising a cylindrical inner wall and the method comprises the following steps:
- conducting a first mixture containing hydrocarbons into the reaction chamber and,
- by means of the first rotor, which is rotated by the drive unit at an angular speed between 300 and 5000 RPM, transferring energy to the first mixture contained in the reaction chamber to split hydrocarbons contained in the first mixture, whereby a second mixture containing split hydrocarbons is obtained, and conveying the second mixture to the outlet section,
wherein the second mixture is conveyed through the outlet section and, when being conveyed through the outlet section, temporarily pressurized by means of a second rotor disposed in the outlet section to a pressure of between 0.2 and 6 bar, in particular between 4 and 6 bar, wherein a temporary pressure increase has a duration of between 0.05 sec and 0.5 sec, and wherein the second rotor comprises two or more vanes and is mounted centrically within the cylindrical inner wall of the outlet section.

The reaction pump used in the method according to the invention comprises two rotors, wherein a first rotor is disposed in a reaction chamber of the reaction pump, in which a reactant mixture is thermally converted into a product mixture, and a second rotor is disposed in an outlet section of the reaction pump, through which the product mixture is conveyed out of the reaction chamber. For example, the reactant mixture comprises lignocellulose waste materials or other hydrocarbon-containing solid materials, carrier oil and a catalyst. The first rotor, which is preferably designed as an impeller, is configured to rotate and thereby transfer energy to the reactant mixture to increase the temperature of the reactant mixture to a desired reaction temperature or temperature range at which hydrocarbons contained in the reactant mixture split, while the second rotor, which is preferably also designed as an impeller, is configured to rotate and thereby both convey the product mixture out of the reaction chamber through the outlet section and temporarily pressurize the product mixture, so that the pressure in the product mixture passing the outlet section is temporarily higher than in the product mixture when being conveyed from the reaction chamber to the outlet section and/or when arriving at the outlet section and/or when leaving the outlet section.

It has been surprisingly found that the second rotor disposed in the outlet section not only accelerates the flow of the product mixture out of the reaction chamber and/or through the outlet section, but also increases the content of converted hydrocarbons, in particular middle distillates like diesel and/or jet fuel, in the product mixture. For example, the conversion rates of middle distillates are increased by several percent. Further, it has been surprisingly found that apart from quality diesel fuels, valuable bitumen raw materials are produced, in particular from biomass solids, hereby.

An explanation of these advantageous effects may be that the second rotor not only accelerates the product mixture and, therefore, shortens the dwell time of the product mixture in the range of the reaction temperatures, but also causes, through a temporary pressure increase, improvements in the reaction processes. For example, in case that the reactant and/or product mixture contains a catalyst, e.g. a zeolite-based catalyst, it is assumed that the temporary pressure increase, which preferably occurs only during fractions of a second, improves the effectiveness of the blended catalyst.

As a result, the method according to aspects of the invention allow for producing liquid fuels and bitumen raw materials from, i.a., lignocellulosic (wood-based) waste materials and other hydrocarbon-containing solid materials. Products of the process are, i.a., diesel fuels with calorific values greater than 40 MJ/kg and quality bitumen raw materials in commercially viable quantities. Further, actual process temperatures and dwell times of the reacting components in the reaction temperature range are significantly below those of other thermal decomposition methods. Compared to conventional approaches, yield- and quality-reducing side reactions are thereby significantly reduced. Last but not least, the method does not require pressure vessels, and the reaction pump and system structure are simple and relatively inexpensive.

In summary, compared to conventional approaches, the method for thermal conversion of hydrocarbons according to aspects of the invention allows for an enhancement of yield and/or quality of the products.

The reaction chamber comprises a cylindrical inner wall, and the first rotor comprises two or more vanes and is mounted eccentrically within the cylindrical inner wall of the reaction chamber. Preferably, the reaction chamber, in particular the cylindrical inner wall of the reaction chamber, and the first rotor form a liquid-ring type pump. Preferably, the first rotor comprises between approximately 10 and 20 vanes, in particular approximately 16 vanes. By rotating the first rotator, which is designed as a vaned impeller, a liquid and/or a liquid component of the first mixture, in particular a carrier oil, residing in the reaction chamber forms, due to centrifugal acceleration, a moving cylindrical ring against the inside of the inner wall. This liquid ring creates a series of seals in the space between the impeller vanes, which form compression chambers. The eccentricity between the impeller's axis of rotation and the inner wall's geometric axis results in a cyclic variation of the volume enclosed by the vanes and the ring, whereby the contents of the enclosed volume, in particular components of the first mixture, is cyclically compressed. The cyclic compression of first mixture components in combination with increased temperatures, enhanced catalytic conditions, intensive mixing and shearing promote optimum conditions for a conversion of the hydrocarbons contained in the first mixture to occur. In this way, yield and/or quality of the products of the thermal conversion process are further enhanced.

The outlet section comprises a cylindrical inner wall, and the second rotor comprises two or more vanes and is centrically mounted within the cylindrical inner wall of the outlet section. Preferably, the outlet section and the second rotor form a centrifugal type pump. Preferably, the second rotor comprises between approximately 4 and 12 vanes, in particular approximately 8 vanes. The second mixture fluid is transported by a conversion of rotational kinetic energy of the second rotor, which is designed as a vaned impeller, to hydrodynamic energy of the fluid flow. Preferably, the second mixture fluid enters the outlet section along or near to the rotating axis of the impeller and is accelerated by the impeller, flowing radially outward into a diffuser or volute chamber (casing), from where it exits the outlet section. The aforementioned aspects of the design of the outlet section allow - alone or in combination - for an enhancement of yield and/or quality of the products of the thermal conversion process in a particularly efficient, robust and reliable way.

According to a preferred embodiment, the reaction pump further comprises a rotatable common shaft on which the first rotor and the second rotor are mounted. In this embodiment, only one drive unit, e.g. an electrical motor, is sufficient to drive, by rotating the common shaft, both the first and second rotor disposed in the reaction chamber and outlet section, respectively. As a result, the reaction pump and system allow for an enhancement of yield and/or quality of the products of the thermal conversion process in a particularly simple way.

The drive unit of the reactor pump can further rotate the second rotor and/or the common shaft at an angular speed between 300 and 5000 RPM. In particular, the first rotor and/or the second rotor and/or the common shaft is rotated by the drive unit at an angular speed between 800 and 1200 RPM or at approximately 1000 RPM.

According to the invention, the second rotor pressurizes the second mixture when being conveyed through the outlet section to a pressure of between 0.2 and 6 bar, in particular between 4 and 6 bar. For example, the pressure in the second mixture when leaving the reaction chamber and/or arriving at the outlet section is between approximately 0.2 bar and -0.4 bar, and temporarily increases in the outlet section to a pressure of between 0.2 and 6 bar. According to the invention, the temporary pressure increase, which has durations of between 0.05 sec. and 0.5 sec. only, is due to the high flow speed and, hence, the short flow time of the second mixture in and/or through the outlet section. Due to the aforementioned process conditions, the splitting components contained in the second mixture leaving the reaction chamber and entering the outlet section are exposed, for a moment, to an increased pressure, whereby conditions of the reaction processes are further improved so that the overall yield and/or quality of the products of the thermal hydrocarbon conversion is further enhanced.

According to yet another preferred embodiment, the reaction pump is provided with a pipe having a proximal end and a distal end and being configured to conduct the second mixture, which has been conveyed through the outlet section, from the proximal end to the distal end, wherein at least a section of the pipe has a cross-section which is decreasing toward the distal end. In this way, the diameter of the pipe through which the second mixture including the reacting splitting components is conveyed out of the outlet section of the reaction pump into a reactor vessel is constricted, preferably shortly before the entry of the second mixture into the reactor vessel, such that the second mixture is, when passing the constricted segment of the pipe, exposed to another temporary pressure increase, whereby the yield of liquid fuels further improves by several percent. Unlike conventional thermal decomposition methods in which pyrolysis oils, gases and coal are obtained, with the approach according to aspects of present invention both quality diesel fuels and valuable bitumen raw materials can be produced, especially from biomass solids.

Because pyrolysis oils from conventional processes often show only cetane values of 25 and caloric values around 20 MJ/kg, apart from cleaning and desul-phurization they need to be subjected to further cost- and energy-consuming refinery processes in order to be usable for motors. Moreover, the amounts of the resulting bituminous materials are to too low to achieve economic relevance.

In contrast, the liquid fuel products obtained with the reaction pump, system and method according to aspects of present invention exhibit, immediately after splitting operation and condensation, already cetane values of between 46 and 60 and caloric values of between 40 and 46 MJ/kg and only need cleaning and de-sulphurization to meet the EU standard for diesel fuels. Further, because of the low process temperatures in contrast to conventional processes, the bituminous fraction of splitting components is largely maintained. Bituminous fractions can be separated along with the other process residues discontinuously from the process liquid and are then available to economic recovery without much additional effort.

Depending on the quality of the starting materials used, from 1000 kg solids and co-processing of 100-150 kg oil, between 250 and 500 liters of liquid fuels (40 - 44 MJ/kg) and 150 - 300 kg of bituminous raw materials can be obtained.

In summary, the quality and the technical usability of both products is high, because - instead of pyrolysis-oil with often less than 20 MJ/kg and coals - diesel fuels with more than 40 MJ/kg and economically highly exploitable bitumen raw materials are obtained. With the use of biomass (for example, wood or agricultural waste) the obtained bio-fuels and bio-bitumen meet the same standards as similar products of fossil origin, however, surpass the latter by far in terms of environmental impact since they are made from renewable resources.

It has to be noted that the reaction pump, system and method according to aspects of the invention is suitable for the conversion of any hydrocarbon-containing materials including, but not limited to, solid hydrocarbon materials like plastic waste according to recycling classification 1 (PETE: Polyethylene Terephthalate), 2 (HDPE: High Density Polyethylene), 4 (LDPE: Low Density Polyethylene) and 5 (PP: Polypropylene), which is preferably processed as an addition to other hydrocarbon-containing materials.

Further advantages, features and examples of the present invention will be apparent from the following description of following figures:
Fig. 1 shows a cross-sectional representation of an example of a reaction pump for thermal conversion of hydrocarbons used in the method according to the invention;
Fig. 2 shows a cross-sectional representation (a), a front view (b), a side view (c), a first perspective view (d) and a second perspective view (e) of an example of a second rotor used in the method according to the invention; and
Fig. 3 shows a flow diagram to illustrate an example of a system for carrying out the method for converting hydrocarbons according to the present invention.

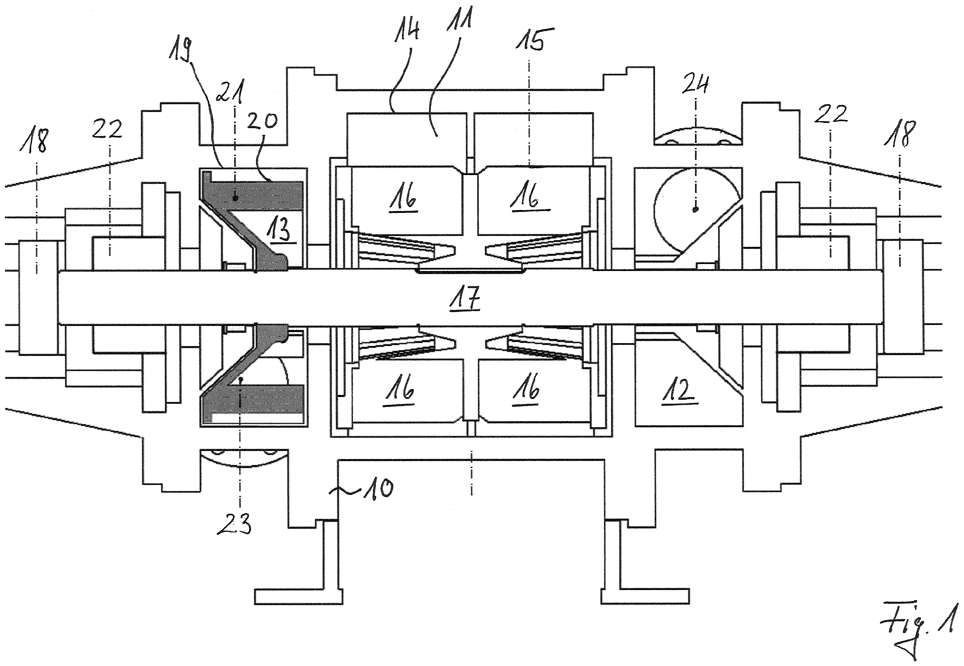

Figure 1 shows a cross-sectional representation of an example of a reaction pump for thermal conversion of hydrocarbons. The reaction pump comprises a housing 10 in which a reaction chamber 11, an inlet section 12 and an outlet section 13 are provided.

The reaction chamber 11 has a cylindrical inner wall 14 encompassing a first rotor 15 designed as an impeller and comprising a plurality of vanes 16 and a shaft 17 which is rotatably mounted in the housing 10 via bearings 18. The vanes 16 are mounted on the shaft 17 and extend radially from the shaft 17. The first rotor 15 is eccentrically mounted in the cylindrical inner wall 14 of the reaction chamber 11, wherein the rotational axis of the shaft 17 is located off the axis of rotational symmetry of the cylindrical inner wall 14. Due to this arrangement, the reaction chamber 11 and the first rotor 15 form a so-called liquid ring-type pump.

The outlet section 13 has a cylindrical inner wall 19 encompassing a second rotor 20 designed as an impeller and comprising a plurality of vanes 21, which are mounted on the shaft 17 too. The vanes 21 can exhibit a curved or planar shape. The second rotor 20 is centrically mounted within the cylindrical inner wall 19 of the outlet section 13, wherein the axis of rotational symmetry of the cylindrical inner wall 19 of the outlet section 13 and the rotational axis of the shaft 17 coincide. Due to this arrangement, the outlet section 13 and the second rotor 20 form a centrifugal-type pump.

A first mixture containing hydrocarbons, preferably a liquid-solid mixture, is passed, via inlet opening 24, into inlet section 12 and conducted to the reaction chamber 11. By rotating the shaft 17 with a drive unit (not shown), e.g. an electric engine, at an angular speed of between 300 and 5000 RPM energy is transferred to the first mixture, whereby temperature and/or pressure of at least a part of the first mixture increases to cause, preferably in combination with intensive mixing and shearing of the mixture, hydrocarbons contained therein to split. In this way, the first mixture is converted into a second mixture containing split hydrocarbons.

The second mixture is conveyed to outlet section 13, where it is accelerated by rotating second rotor 20. Preferably, the second mixture fluid enters the outlet section 13 along or near to the rotating axis of the second rotor 20 and is accelerated by the rotating second rotor 20, whereby it is caused to flow radially outward to outlet opening 23.

In order to avoid contact of the first and/or second mixture with the bearings 18, between inlet section 12 and outlet section 13 and respective bearing 18 a sealing element 22 is provided.

The second rotor 20 is configured both to convey the second mixture out of the reaction chamber 11 through the outlet section 13 and to temporarily pressurize the second mixture, so that the pressure in the mixture passing the outlet section 13 is temporarily higher than prior to entering the outlet section 13 and/or after leaving the outlet section 13. Surprisingly, the second rotor 20 not only accelerates the flow of the second mixture out of the reaction chamber 11 and/or through the outlet section 13, but also increases - compared to a reaction pump without a second rotor provided in the outlet section - the content of converted hydrocarbons, in particular middle distillates like diesel and/or jet fuel, in the second mixture. Further, it has been unexpectedly found that, after passing the outlet section 13, the second mixture contains, apart from quality diesel fuels, valuable bitumen raw materials in commercially viable quantities.

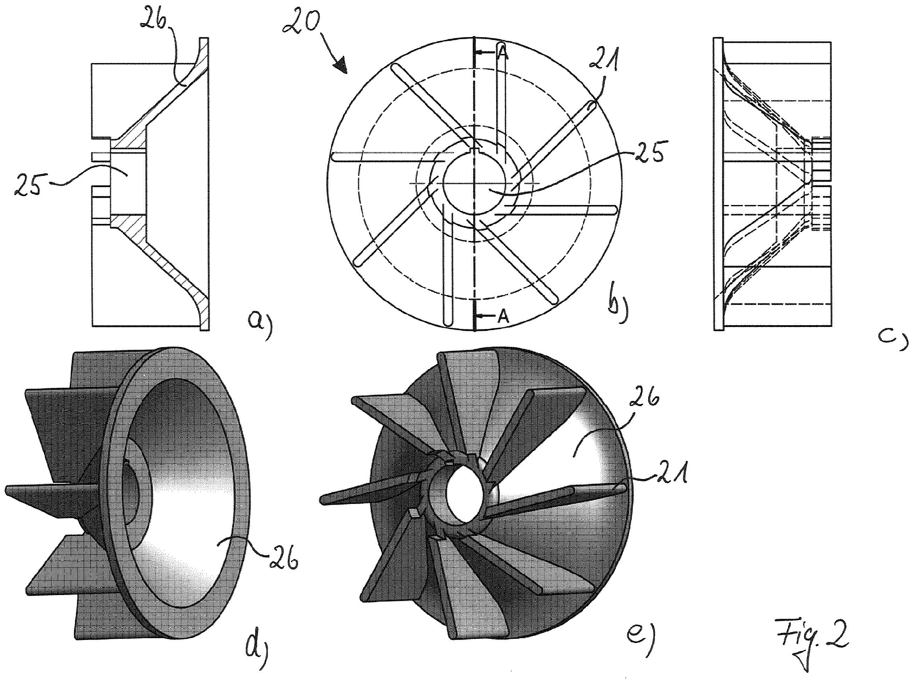

Figure 2 shows a cross-sectional representation (a), a front view (b), a side view (c), a first perspective view (d) and a second perspective view (e) of an example of a second rotor 20, which is disposed in the outlet section 13 of the reaction pump shown in Fig. 1. In present example, the second rotor 20 comprises a funnel-shaped, bowl-shaped or frustoconical body 26 on which eight planar vanes are mounted. The vanes extend tangentially from a circular aperture 25 provided in the center of the body 26. By means of the circular aperture 25 the second rotor 20 can be mounted on common shaft 17 (not shown). It is noted that various different embodiments of present example are possible, wherein, e.g., more or less than eight vanes and/or curved vanes and/or vanes radially extending from the circular aperture are provided.

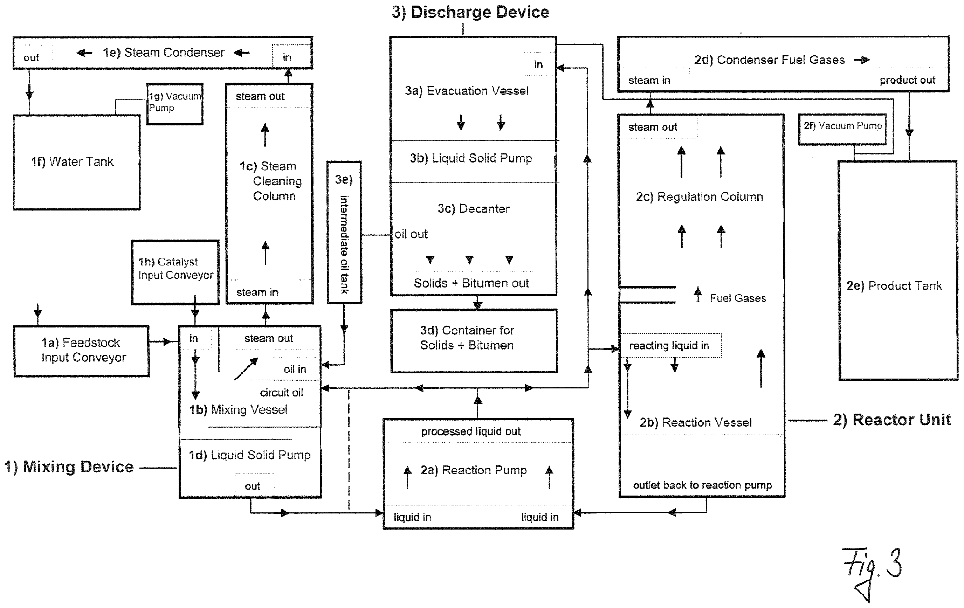

Figure 3 shows a flow diagram to illustrate an example of a system and a method for thermal conversion of hydrocarbons.

Materials to be processed are entered in a mixing device 1, where they are heated in a carrier oil and mixed with a catalyst. Thereafter, the mixture is supplied to the oil flow of a reactor unit 2. The reactor unit 2 comprises a vessel 2b equipped with a stirrer, a reaction pump 2a according to the example shown in Fig. 1, and a discharge line through which gases from the vessel 2b can directly reach a condenser 2d. From the bottom of the vessel 2b, the reaction pump 2a continuously intakes process fluid and feeds the reaction products back into the top of the vessel 2b.

Only in the short moment of passing the reaction pump 2a the materials are exposed to temperatures that lead to molecular breakdown. Due to the high flow rate of the process liquid, the materials are exposed only very briefly to the necessary temperatures for molecular decomposition. The splitting temperatures are generated inside the reaction pump 2a in particular by friction of process liquid and material particles mixed in through rapidly rotating rotor blades (see vanes 16 of the first rotor 15 in Fig. 1). The reaction temperatures are generated at exact the spot where they are needed and only reached within the reaction pump 2a.

The continuous process fluid flow transports the reaction products formed in fractions of a second after the split back into the vessel 2b of the reactor unit 2 where prevail again significantly lower temperatures and where gaseous decomposition products can leave immediately.

The dwell time of reaction products in the reaction temperature range is significantly lower than for other thermal decomposition methods. The resulting gaseous reaction products leave the system immediately and are liquefied just seconds after its formation through a condenser 2d.

Not vaporizing reaction products, in particular bituminous fractions and process residues, are separated by a discharge device 3 from the process fluid. "Reaction water" resulting from the reaction leaves the reactor unit 2 along with the fuel gases and separates after condensation in the product tank. Non-condensable gases produced by the splitting reaction are continuously drawn off via vacuum pump 2f and supplied to thermal utilization.

The reaction pump 2a is integrated into the reactor unit 2 and - as already explained above in connection with Fig. 1 - combines the operational principle of a liquid ring-type vacuum pump with the operating principle of a centrifugal-type pump. The reaction pump 2a is able to intake liquid and liquid-solid mixtures, to strongly heat them in fractions of a second and to pump them with high-speed and temporary pressurization.

In the following, system components and their functions are described in further detail.

The basic structure of the system - also referred to as "plant" - comprises three units or devices, which are interconnected and in which mixtures of solids and liquids are moved:
- Mixing device 1 is designed for oil-solid mixing, residual dehumidification and pre-heating of materials to be processed.
- Reactor unit 2 is designed for thermo-catalytic splitting of solids and immediate subsequent fuel gas condensation.
- Discharge device 3 is designed for discharging non-evaporating splitting products and process residues from process fluid, returning carrier oil for reuse into the process.

As carrier medium preferably, but not necessarily, mineral oil is used.

Before the system can be put into operation oil is poured into the mixing device 1 and brought to a temperature level above 120 °C. Into the reaction vessel 2b of the reactor unit 2 also oil is introduced which is brought to a temperature level around 300°C. The capacity depends on the size of the plant, but is about 30 - 60 % of the total volume of each boiler.

Because during operation usually all heat input is generated by the reaction pump 2a, the system usually does not need to be equipped with additional heating facilities from outside. Moreover, an initial input of heat, which is necessary to put the plant into operational mode, can be carried out by the reaction pump 2a. It can be switched in a way that mixing device 1 or reactor unit 2 can be heated separately, or mixing device 1 and reactor unit 2 can be heated up at the same time.

Once the oil in the mixing device 1 and the reactor unit 2 has been heated until the oil in the mixing device 1 reaches the desired temperature, the two units are separated and only the oil in the reactor unit 2 is further heated. In this way, the pre-process heating of the oil in the mixing device 1 and the reactor unit 2 can be achieved by the reaction pump 2a.

### Mixing device 1

Before entering into the mixing device 1, the materials to be processed are exempted from inorganic materials (glass, stones, metals, etc.), substantially moisture-reduced and reduced to particle sizes of less 2mm.

Thereafter, the materials are ready to be processed and can be entered into the mixing device 1. The mixing device 1 comprises of at least a mixing vessel 1b with agitator and at least one liquid-solid pump 1d which maintains the material mixture in a circulation and is able to supply it to the reactor unit 2, if required.

All liquid-conducting components of the mixing device 1 are thermally insulated against heat loss. In the mixing device 1 the materials are mixed with catalyst, e.g. a catalyst in powder form or a liquid catalyst, and brought to certain temperature depending on the materials used.

Above a certain concentration of solids in the mixing device 1 pre-tempered solid-oil mixture is then ready to be fed into the reactor unit 2. The forwarding of the materials from the mixing device 1 into the reactor unit 2 is carried out discontinuously in dependence on the performance of the reaction pump 2a.

After each introduction of material from the mixing device 1 into the reactor unit 2 the appropriate amount of material is replaced by a new entry from the feedstock input conveyor 1a into the mixing device 1.

### Reactor unit 2

From the mixing device 1 the solid-oil mixture is intermittently introduced into the reactor unit 2. Input quantities and input time intervals to be adjusted to the processing power of the reaction pump 2a. The material mix immediately in and become part of the circulating process liquid. Only moments after having been mixed in, materials flow through the reaction pump 2a. Preferably, in the reactor unit 2 all fluid touching components are thermally insulated against heat loss.

Depending on the materials to be processed and the aimed products the temperature level of the reactor unit 2 is maintained between 260°C and 350°C, preferably between 290C° and 320°C. Solely in the reaction pump 2a itself at some point temperatures up to 400°C prevail.

In the moment the circulating process liquid stream flows through the reaction pump 2a, materials are briefly exposed to temperatures of 350°C to 400°C generated by friction on rapidly rotating rotor blades. For a short moment the thermal conditions for molecular splitting of the solids are given. Resulting fuel gases leave the reaction pump 2a together with the process fluid flow and other decomposition products immediately and arrive immediately in areas of much lower temperatures. Gaseous decomposition products can leave immediately towards condenser 2d, where, only seconds after the split, the gases are liquefied again. Not vaporized decomposition products such as bituminous raw materials and process residues remain for a time in the process liquid stream of the reactor unit 2 and are intermittently supplied to the discharge device 3 for discharging.

In the reactor unit 2 the filling level of reaction vessel 2b always remains between two desired points, because the quantity of oil reduced by discharging the reactor unit 2 is always supplied before the discharge phase.

### Discharge device 3

In the process fluid stream of reactor unit 2 non-evaporating splitting products and process residues accumulate. This leads to a steady rise in viscosity. At intervals, a discharge is done to ensure flowability. Therefore, at intervals a part of the circulating process liquid stream in the reactor unit 2 is supplied to the discharge device 3.

The discharge device 3 comprises an evacuation vessel 3a equipped with a stirrer, a liquid-solid pump 3b and a decanter 3c. It also has a heat exchanger or cooling coils surrounding the vessel. The cooling method is implemented with oil from the storage tank for process oil. Therewith, before the entry (or re-entry) in the process this oil is heated by the oil leaving the process. Part of the heat leaving the process is recovered in this way. Agitator and pump 3b maintain the solid-liquid mixture in motion during cooling and supply streams to the Decanter. Bituminous materials and process residues separated by the Decanter from the carrier oil are forwarded to economic exploitation. The separated oil goes back into in the process for reuse.

### Products

The main products of the process are liquid fuels in the range of diesel fuel and bituminous materials.

### Process sequence

In the first step of the process, comminuted raw materials are introduced into the mixing device 1, dehumidified there in hot oil and mixed intensively with a zeolite-based catalyst.

The resultant liquid-solid mixture is then fed intermittently into the reactor unit 2. There, the materials pass through a reaction pump 2a where high-speed rotors produce strong friction. The generated heat, which is mainly caused by friction directly on the particle surface of the solids, leads to molecular splitting, in particular of hydrocarbons contained in the mixture. After flowing through the reaction pump 2a reacting components immediately reach a region of significantly lower temperatures. The reaction components are exposed for a very short time to the necessary reaction temperatures. The resulting fuel gases exit the process immediately after emergence and pass a condenser 2d to form liquid fuel.

From time to time recovered bituminous materials and resulting process residues are withdrawn from the process liquid. The oil, from which bitumen and process residuals have been removed, is conducted back into the process for reuse.

Utilization of aluminosilicate-based highly crystalline catalyst and short residence time of cleavage products in the range of the reaction temperatures result - compared to conventional methods - in significantly higher fuel qualities, significantly higher yields in liquid fuel and quality bituminous materials.

The method is based on the specific operation of the reaction pump 2a integrated in the reactor unit 2. When passing the reaction pump 2a the aspirated material particles heat up in very short time from 300°C to between approximately 350°C and 400°C. At these temperatures, the hydrocarbon molecule chains decompose, and the obtained splitting components arrive, together with with the process fluid stream, only fractions of a second later again in the reaction vessel 2b at temperatures of approximately 300°C.

The process in the reaction chamber of the reaction pump 2a works, preferably exactly, on the required temperature level for splitting up the materials. Conventional methods in which the reaction is achieved by heat supply from outside usually work at approximately 150 to 200°C higher temperatures to generate sufficient temperatures for the splitting of all materials in the interior of the reaction chamber. However, higher temperatures not only lead to higher energy expenditure (operating costs) but also to quality and yield-reducing side reactions.

In distinction to this, with the reaction pump 2a used in the method according to the of present invention the necessary heat for splitting is not introduced to the reaction chamber, e.g. by means of burners or an electrical heating, from the outside. Rather, the necessary heating is caused by excessive friction of process liquid and present solid particles by rapidly rotating rotor blades. In other words, heat is generated due to a strong movement of dispersed materials and arises directly on the surfaces of the particles to be processed. The molecular chains, in particular molecular chains of hydrocarbons, of the material particles disintegrate at the moment of reaching their specific decomposition temperature. After a split second, resulting fuel gases may leave the area of reaction temperatures. Thus, there is little time for undesired side reactions. Unlike conventional methods, the short dwell time of the cleavage products in the area of reaction temperatures, the relatively low process temperatures in general and the utilization of zeolite-based catalyst not only lead to a formation of liquid fuel products of higher quality, but also to obtain economically relevant quantities of bituminous materials.

As already set forth in detail above in connection with Fig. 1 and Fig. 2, the reaction pump 2a is designed to successively act as a liquid ring-type vacuum pump and a centrifugal-type pump. First, the principle of a liquid-ring vacuum pump is used for sucking, dispersing, heating, and conveying the material. Subsequently, the liquid flow is greatly accelerated and pressurized in the outlet section of the reaction pump using the principle of the centrifugal pump.

In this way, high process fluid flow rates can be achieved and the following steps can take place in shortest time sequence consecutively:
1) absorption of process liquid through low pressure;
2) dispersion of solids in oil;
3) temperature increase of 50-100°C in fractions of seconds;
4) molecular decomposition of solid particles;
5) fast transport of process fluid;
6) pressurizing the cleavage components immediately after splitting reaction; and
7) fast further transport of splitting components, which are present in the process liquid, into regions of lower temperatures.

The construction of the reaction pump 2a allows high heating rates generated by the participation of the material particles themselves, in combination with high process liquid throughput. The operation of the reaction pump 2a is based on the combination of two different pump principles in one device. This combination of two different pump principles enables the above-mentioned steps 1) to 7) to be carried out consecutively in fractions of a second. This rapid series of processes allows high yield of liquid fuels and preservation of bituminous materials.

Preferably, in the splitting process catalysts or minerals are used, which are identical or similar to components of certain asphalt mixtures. As a result, bituminous materials without other process residues are obtained, which can be applied as substitute or aggregate material for specific asphalt mixtures.

### List of Reference Signs:

- 1: Mixing Device
- 1a: Feedstock Input Conveyor
- 1b: Mixing Vessel with Agitator
- 1c: Steam Cleaning Column
- 1d: Liquid Solid Pump
- 1e: Steam Condenser
- 1f: Water Tank
- 1g: Vacuum-Pump
- 1h: Catalyst Input Conveyor
- 2: Reactor Unit
- 2a: Reaction Pump
- 2b: Reaction Vessel
- 2c: Regulation Column
- 2d: Fuel Gases Condenser
- 2e: Product Tank
- 2f: Vacuum Pump
- 3: Discharge Device
- 3a: Evacuation Vessel
- 3b: Liquid Solid Pump
- 3c: Decanter
- 3d: Container for Solids and Bitumen
- 3e: Recycle Oil Intermediate Tank
- 10: Housing of Reaction Pump
- 11: Reaction Chamber
- 12: Inlet Section
- 13: Outlet Section
- 14: Inner Wall of Reaction Chamber
- 15: First Rotor
- 16: Vanes of First Rotor
- 17: Shaft
- 18: Bearing
- 19: Inner Wall of Outlet Section
- 20: Second Rotor
- 21: Vanes of Second Rotor
- 22: Sealing Element
- 23: Outlet Opening
- 24: Inlet Opening

## Claims

1. A method for thermal conversion of hydrocarbons using a reaction pump, the reaction pump comprising a reaction chamber (11) comprising a cylindrical inner wall (14), a first rotor (15) disposed in the reaction chamber (11), wherein the first rotor (15) comprises two or more vanes (16) and is mounted eccentrically within the cylindrical inner wall (14) of the reaction chamber (11), a drive unit configured to rotate the first rotor (15), and an outlet section (13) comprising a cylindrical inner wall (19), the method comprising the following steps:
- conducting a first mixture containing hydrocarbons into the reaction chamber (11) and,
- by means of the first rotor (15), which is rotated by the drive unit at an angular speed between 300 and 5000 RPM, transferring energy to the first mixture contained in the reaction chamber (11) to split hydrocarbons contained in the first mixture, whereby a second mixture containing split hydrocarbons is obtained, and conveying the second mixture to the outlet section (13),
**characterized in that**
the second mixture is conveyed through the outlet section (13) and, when being conveyed through the outlet section (13), temporarily pressurized by means of a second rotor (20) disposed in the outlet section (13) to a pressure of between 0.2 and 6 bar, in particular between 4 and 6 bar, wherein a temporary pressure increase has a duration of between 0.05 sec and 0.5 sec, and wherein the second rotor (20) comprises two or more vanes (21) and is mounted centrically within the cylindrical inner wall (19) of the outlet section (13).

2. The method according to claim 1, wherein the reaction pump comprises a rotatable common shaft (17) on which the first rotor (15) and the second rotor (20) are mounted, wherein the second rotor (20) and/or the common shaft (17) is rotated by the drive unit at an angular speed between 300 and 5000 RPM.

3. The method according to claim 1 or 2, wherein the first rotor (15) and/or the second rotor (20) and/or the common shaft (17) is rotated by the drive unit at an angular speed between 800 and 1200 RPM.

4. The method according to any one of the preceding claims, wherein the reaction pump comprises a pipe having a proximal end and a distal end, wherein at least a section of the pipe has a cross-section which is decreasing toward the distal end, and wherein the pipe conducts the second mixture, which has been conveyed through the outlet section (13), from the proximal end to the distal end.

5. The method according to claim 4, wherein a diameter of the pipe through which the second mixture including the reacting splitting components is conveyed out of the outlet section (13) of the reaction pump into a reactor vessel (2b) is constricted, in particular shortly before the entry of the second mixture into the reactor vessel (2b), such that the second mixture is, when passing the constricted segment of the pipe, exposed to another temporary pressure increase.

## Patentansprüche

1. Verfahren zur thermischen Umwandlung von Kohlenwasserstoffen unter Verwendung einer Reaktionspumpe, wobei die Reaktionspumpe eine Reaktionskammer (11) mit einer zylindrischen Innenwand (14), einen in der Reaktionskammer (11) angeordneten ersten Rotor (15), wobei der erste Rotor (15) zwei oder mehr Flügel (16) aufweist und exzentrisch in der zylindrischen Innenwand (14) der Reaktionskammer (11) gelagert ist, eine Antriebseinheit, die zum Drehen des ersten Rotors (15) ausgebildet ist, und einen Auslassabschnitt (13) mit einer zylindrischen Innenwand (19) aufweist, wobei das Verfahren die folgenden Schritte aufweist:
- Einleiten eines ersten Gemisches, das Kohlenwasserstoffe enthält, in die Reaktionskammer (11) und,
- mittels des ersten Rotors (15), der von der Antriebseinheit mit einer Winkelgeschwindigkeit zwischen 300 und 5000 U/min gedreht wird, Übertragen von Energie auf das in der Reaktionskammer (11) enthaltene erste Gemisch, um in dem ersten Gemisch enthaltene Kohlenwasserstoffe aufzuspalten, wodurch ein zweites Gemisch, das aufgespaltene Kohlenwasserstoffe enthält, erhalten wird, und Fördern des zweiten Gemisches zu dem Auslassabschnitt (13),
**dadurch gekennzeichnet, dass**
das zweite Gemisch durch den Auslassabschnitt (13) befördert wird und, wenn es durch den Auslassabschnitt (13) befördert wird, mittels eines zweiten Rotors (20), der in dem Auslassabschnitt (13) angeordnet ist, vorübergehend auf einen Druck zwischen 0,2 und 6 bar, insbesondere zwischen 4 und 6 bar, unter Druck gesetzt wird, wobei ein vorübergehender Druckanstieg eine Dauer zwischen 0,05 Sekunden und 0,5 Sekunden hat, und wobei der zweite Rotor (20) zwei oder mehr Flügel (21) aufweist und zentrisch innerhalb der zylindrischen Innenwand (19) des Auslassabschnitts (13) angebracht ist.

2. Verfahren nach Anspruch 1, wobei die Reaktionspumpe eine drehbare gemeinsame Welle (17) aufweist, auf der der erste Rotor (15) und der zweite Rotor (20) montiert sind, wobei der zweite Rotor (20) und/oder die gemeinsame Welle (17) von der Antriebseinheit mit einer Winkelgeschwindigkeit zwischen 300 und 5000 U/min gedreht wird.

3. Verfahren nach Anspruch 1 oder 2, wobei der erste Rotor (15) und/oder der zweite Rotor (20) und/oder die gemeinsame Welle (17) von der Antriebseinheit mit einer Winkelgeschwindigkeit zwischen 800 und 1200 U/min gedreht wird.

4. Verfahren nach einem der vorhergehenden Ansprüche, wobei die Reaktionspumpe ein Rohr mit einem proximalen Ende und einem distalen Ende aufweist, wobei mindestens ein Abschnitt des Rohrs einen Querschnitt aufweist, der zum distalen Ende hin abnimmt, und wobei das Rohr das zweite Gemisch, das durch den Auslassabschnitt (13) befördert wurde, vom proximalen Ende zum distalen Ende leitet.

5. Verfahren nach Anspruch 4, wobei ein Durchmesser des Rohres, durch das das zweite Gemisch mit den reagierenden Spaltkomponenten aus dem Auslassabschnitt (13) der Reaktionspumpe in einen Reaktorbehälter (2b) gefördert wird, insbesondere kurz vor dem Eintritt des zweiten Gemisches in den Reaktorbehälter (2b), derart verengt wird, dass das zweite Gemisch beim Passieren des verengten Rohrabschnittes einer weiteren vorübergehenden Druckerhöhung ausgesetzt wird.

## Revendications

1. Procédé de conversion thermique d'hydrocarbures à l'aide d'une pompe à réaction, la pompe à réaction comprenant une chambre de reaction (11) comprenant une paroi intérieure cylindrique (14), un premier rotor (15) disposé dans la chambre de réaction (11), dans lequel le premier rotor (15) comprend deux ou plusieurs ailettes (16) et est monté de manière excentrique à l'intérieur de la paroi intérieure cylindrique (14) de la chambre de réaction (11), une unité d'entraînement configurée pour faire tourner le premier rotor (15), et une section de sortie (13) comprenant une paroi intérieure cylindrique (19), le procédé comprenant les étapes suivantes :
- amener un premier mélange contenant des hydrocarbures dans la chambre de réaction (11) et,
- au moyen du premier rotor (15), qui est mis en rotation par l'unité d'entraînement à une vitesse angulaire comprise entre 300 et 5000 tours/minute, transférer de l'énergie au premier mélange contenu dans la chambre de réaction (11) pour diviser les hydrocarbures contenus dans le premier mélange, ce qui permet d'obtenir un deuxième mélange contenant des hydrocarbures divisés, et acheminer le deuxième mélange vers la section de sortie (13),
**caractérisé par le fait que**
le second mélange est acheminé à travers la section de sortie (13) et, lorsqu'il est acheminé à travers la section de sortie (13), temporairement pressurisé au moyen d'un second rotor (20) disposé dans la section de sortie (13) à une pression comprise entre 0,2 et 6 bars, en particulier entre 4 et 6 bars, une augmentation temporaire de la pression ayant une durée comprise entre 0,05 sec et 0,5 sec, et le second rotor (20) comprenant deux ou plusieurs aubes (21) et étant monté au centre de la paroi intérieure cylindrique (19) de la section de sortie (13).

2. Procédé selon la revendication 1, dans lequel la pompe à réaction comprend un arbre commun rotatif (17) sur lequel le premier rotor (15) et le second rotor (20) sont montés, le second rotor (20) et/ou l'arbre commun (17) étant tournés par l'unité d'entraînement à une vitesse angulaire comprise entre 300 et 5000 tours/minute.

3. Procédé selon la revendication 1 ou 2, dans laquelle le premier rotor (15) et/ou le second rotor (20) et/ou l'arbre commun (17) est entraîné par l'unité d'entraînement à une vitesse angulaire comprise entre 800 et 1200 tours/minute.

4. Procédé selon l'une quelconque des revendications précédentes, dans lequel la pompe de réaction comprend un tuyau ayant une extrémité proximale et une extrémité distale, dans lequel au moins une section du tuyau a une section transversale qui diminue vers l'extrémité distale, et dans lequel le tuyau conduit le second mélange, qui a été acheminé à travers la section de sortie (13), de l'extrémité proximale à l'extrémité distale.

5. Procédé selon la revendication 4, dans lequel un diamètre du tuyau à travers lequel le second mélange comprenant les composants de division en réaction est acheminé hors de la section de sortie (13) de la pompe de réaction dans une cuve de réacteur (2b) est rétréci, en particulier peu avant l'entrée du second mélange dans la cuve de réacteur (2b), de sorte que le second mélange est, lorsqu'il passe le segment rétréci du tuyau, exposé à une autre augmentation temporaire de la pression.
